Europäisches Patentamt

European Patent Office

Office européen des brevets

(11) Publication number: **0 138 583**
**B1**

# EUROPEAN PATENT SPECIFICATION

(45) Date of publication of patent specification: **20.12.89**

(51) Int. Cl.⁴: **B 25 J 19/00**, G 21 C 19/00

(21) Application number: **84306954.3**

(22) Date of filing: **11.10.84**

(54) **Remote manipulators for steam generators.**

(30) Priority: **11.10.83 US 540221**

(43) Date of publication of application:
**24.04.85 Bulletin 85/17**

(45) Publication of the grant of the patent:
**20.12.89 Bulletin 89/51**

(84) Designated Contracting States:
**CH DE FR LI SE**

(56) References cited:
**EP-A-0 066 791**
**FR-A-2 394 374**
**US-A-3 913 752**
**US-A-4 302 146**

(73) Proprietor: **THE BABCOCK & WILCOX COMPANY**
**1010 Common Street P.O. Box 60035**
**New Orleans Louisiana 70160 (US)**

(72) Inventor: **Klahn, Francis C.**
**Route 2, Box 109A**
**Huddleston Virginia (US)**
Inventor: **Werner, Charles W.**
**9144 Oakland Circle**
**Lynchburg Virginia (US)**
Inventor: **Fasnacht, Floyd A., Jr.**
**114 Londonberry Road**
**Forest Virginia 24551 (US)**

(74) Representative: **Cotter, Ivan John et al**
**D. YOUNG & CO. 10 Staple Inn**
**London WC1V 7RD (GB)**

Courier Press, Leamington Spa, England.

## Description

This invention relates to remote manipulators for steam generators.

In a variety of environments it may be highly desirable to provide a platform or carriage from which various types of work can be conducted remotely. Furthermore, it may be necessary to move the work station relative to the surface or member on which the work is being conducted. Space limitations or biological considerations may make it desirable to control such movement remotely. A prime example of this need is presented by a nuclear steam generator, where it may be necessary to inspect or repair some of the tubes inside the steam generator. Normally, these repairs are only required after the steam generator has been operated, which naturally renders the steam generator radioactive. The level of radioactivity within the steam generator may seriously limit the amount of time a man can spend in the environment. In addition, to work in this environment at all a man must wear bulky and heavy protective gear which severely restricts his mobility, vision and stamina. Therefore, it is desirable and sometimes perhaps necessary to provide remotely operable and controllable means for performing the required work.

Numerous prior art devices for performing specialised functions, for example directing an eddy current probe through the tubes, have been developed. One such effort is disclosed in US Patent No. US-A-3 913 752, issued to Ward et al on 21 October 1975, which is commonly referred to within the industry as a "finger walker". Such devices are slow, cumbersome, difficult to control and locate precisely and do not retain a firm hold on the tubesheet. Therefore, they are not capable of carrying heavy loads. In addition, such a manipulator is not capable of operating in the top head of a once through steam generator. Furthermore, such devices must be installed and removed by a person who is inside the hazardous steam generator.

Another such device is disclosed in US Patent No. US-A-4 216 832, issued 12 August 1982 to Galthorne. This device also is capable of operating only in the bottom head of a recirculating steam generator. Furthermore, this device and others of its kind are not capable of remote installation in and removal from a nuclear steam generator. A man must go inside the head of the steam generator to install the device and to remove it.

Although the time required for installation and removal of the device is less than would be required for a man to enter the steam generator and actually perform the required work, many of the disadvantages of having a man work inside the steam generator still arise because he must be available to install and later remove the device, with the consequent exposure to radiation this entails. Radiation levels inside a nuclear steam generator are two to three times higher than those outside it, even when emissions from the manway (an access port to the steam generator) are included in outside radiation measurement. Thus, a remotely installed and removed apparatus would substantially reduce radiation burn out of jumpers, lowering labour costs and reducing personnel needs.

One effort to overcome this difficulty is disclosed in general terms in European Patent Application Publication No. EP-A-0 066 791 (Vermaat) published on 15 December 1982. In EP-A-0 066 791, the top of the supporting pole is detachably connected to a mounting rod which extends outside the access port of the steam generator, commonly referred to as a manway, and is held by a man who guides an anchor pin into the tubesheet. The main arm is then guided through the manway on a channel rail and attached to the bottom of the supporting pole. From this position, the main arm is moved up the supporting pole to the work position. In a second embodiment, the apparatus is previously assembled with the main arm being already attached to the supporting pole. In this case, it is not necessary that the main arm be run into the steam generator on the channel rail. Still, however, a man must lift the apparatus to the top of the head of the steam generator, locate the locator tubes and install the anchor pins in the appropriate tubes. The tubes of a nuclear steam generator are typically 15.8 mm (5/8 in) in diameter and are closely packed. It is essential that the anchor pins be located in the correct tubes; otherwise the device will not know where its tool is located. The apparatus weighs in excess of 45kg (100lb) and must be raised approximately 1.5m (5ft) by a man who is laterally removed from the apparatus by 0.9 to 1.2m (3 to 4ft). In addition, the man must wear protective clothing to shield him from the radiation emanating from the manway. Thus, installation of this apparatus in either embodiment is a skilled operation requiring great strength combined with considerable dexterity. In addition, the apparatus is capable of operation only in the head of a recirculating steam generator.

Therefore, a need exists for an apparatus which includes one or more of the following features. It can be remotely installed and removed from a steam generator. It can be operated in a recirculating steam generator, or in the top or bottom head of a once through steam generator. It is capable of reaching nearly all the tubes of a recirculating steam generator or a once through steam generator from one location. It can reach all tubes of a once through steam generator with one change of position. It is capable of performing a variety of operations with a variety of tools that can be quickly changed while maintaining the ability to locate any individual tube with any individual tool and accordingly is capable of sustaining high loads and forces without substantial deflection.

According to the present invention there is provided a method of installing a remote manipulator within the head of a steam generator, the manipulator comprising a mast, an articulating arm releasably attachable to the mast by means of a trolley plate for movement along the mast, and means for detachably connecting tools to the articulating arm, the method being characterised by:

attaching one end of a cable to the interior of the head of the steam generator:

hoisting the mast of the manipulator along the cable into a substantially perpendicular position against a tubesheet of the steam generator;

fixedly securing the mast, when positioned in the perpendicular position, against the tubesheet;

hoisting the articulating arm into position against the mast; and

locking the articulating arm releasably on the trolley plate.

According to the present invention there is also provided a remote manipulator for installation within the head of a steam generator by a method set out above, the manipulator comprising:

a mast;

means for installing the mast in a substantially perpendicular position against a tubesheet within the head of the steam generator;

means for fixedly securing the mast against the tubesheet, when the mast is positioned in the perpendicular position;

an articulating arm moveable along the mast;

means for detachably connecting tools to the articulating arm; and

means for providing rotational movement of the articulating arm about the mast;

characterised by:

a trolley plate carried by the mast for guided lengthwise movement along the mast;

means for detachably locking the articulating arm on to the trolley plate;

means for controllably moving the trolley plate lengthwise along the mast so as to provide controlled perpendicular movement of the articulating arm; and

means for attaching the mast and the articulating arm to a hoisting mechanism for installation within the head, such that, during installation, firstly the mast can be hoisted along a cable having one end attached to the interior of the head of the steam generator to allow the mast to be fixedly secured to the tubesheet, and secondly the articulating arm can be hoisted into position against the mast.

Preferred apparatus embodying the invention and described in detail below with reference to the accompanying drawings includes the above-listed features.

The preferred apparatus described below can be installed and removed from a steam generator without having a man enter the steam generator, that is, remotely. Also, the apparatus is capable of working in either a once through steam generator or a recirculating steam generator. Further, the apparatus can operate in the top head of a once through steam generator. The apparatus is capable also of reaching all tubes in either the top or bottom head of a once through steam generator with one change of position, and capable of reaching the overwhelming majority of tubes without changing position. Yet further, the apparatus is capable of performing a variety of operations with a variety of tools within a steam generator, and will withstand the loads required for virtually any tube work performed in a steam generator while being able to locate itself with sufficient precision to carry out detailed work.

A brief description of the preferred apparatus follows. Operating from outside a manway, acable is attached to a designated anchor pin in the tubesheet of a recirculating steam generator, or in the bottom head of a once through steam generator, and a vertical support beam, called a mast, is hoisted into position along the cable. A rod, which is not attached to the mast, may be used to help guide the mast, which is seated in the tubesheet by locator pins. Alternatively, the top of the mast may be equipped with anchoring fingers that expand to provide a firm grip within the appropriate tubes without damaging the tubes. A pneumatically actuated foot is then adjusted downwardly until it firmly grips the floor of the steam generator head, thereby providing a firmly anchored and supported mast.

The preferred apparatus includes an articulating arm for locating appropriate tubes and positioning tools. The articulating arm is hoisted into position on the mast by means of a cable attached to the mast and may be guided into position with a pole manipulated by a man outside the manway. The articulating arm then locks into position by means of a double V-block coupler or other suitable coupling device, which is reinforced and further locked into coupling position by a pneumatically actuated pin driven into aligned keyways in male and female members of the coupler, or other suitable coupling means. A computer-controlled locating system then orients a tool carrier of the articulating arm within the steam generator and directs movement of the tool carrier to any designated tube for inspection or repair, such as tube cleaning, tube sleeving, eddy current probing, tube welding, tube plugging, tube profilometry measuring or other tasks.

An embodiment of the preferred apparatus designed to operate in the lower head of a once through steam generator comprises a turntable which is introduced into the steam generator along a cable attached to a locator pin in the same fashion as the mast is installed. The turntable installing apparatus, resembling a jack, is likewise installed and is located on the floor of the head of the steam generator. This apparatus lifts the turntable to the tubesheet, where the turntable is anchored into appropriate tubes. In this case the mast is subsequently introduced into the steam generator along a cable attached to the turntable and is then anchored against the turntable. The articulating arm is then installed in the same way it is installed in the recirculating steam generator. The turntable locks into a position in which the double V-block coupler of the mast will face the manway for installation of the articulating arm and tools, and then can be rotated 90 degrees of arc in either direction from the initial position thereby providing two working positions 180 degrees apart, thereby permitting access to the 360 degrees of available tubes in the once through steam generator.

In another embodiment of the preferred apparatus designed to operate in the top head of a once through steam generator, the apparatus includes a stub-mast affixed to a turntable for introduction into the top head. In this case, an installation support pole carrying a cable leans against the inlet piping in the head of the steam generator and has its opposite end detachably connected to the flange of the manway. The cable is attached to the top of the stub-mast and the stub-mast is hoisted along the installation support pole, from which it hangs attached by a block and tackle. When the appropriate position has been reached, the stub-mast is lowered to the tubesheet by means of the block and tackle and anchoring pins anchor the stub-mast to the tubesheet. The top of the stub-mast is not supported. The articulating arm is introduced into the head of the steam generator by means of a block and tackle attached to the installation support pole. It is hoisted along the installation support pole until it is in position adjacent to the stub-mast and then it is lowered by means of the block and tackle into locking engagement with the stub-mast. The two members are coupled by the double V-block coupler, as in the case of the bottom head embodiment. The lower portion of the block and tackle is removed from the articulating arm. The installation apparatus can remain inside the steam generator throughout maintenance work performed by the apparatus, or can be removed, whichever is more convenient.

In either embodiment, the vertical position of the articulating arm is controlled and the articulating arm moves within a V-shaped channel track, which provides close tolerances and high strength. In the embodiment designed for use in the top head of a once through steam generator, having only bottom support requires a somewhat broader base and stiffer mast.

In the embodiment for the top of a once through steam generator, the mast is anchored by anchoring fingers which provide a very firm grip on the inner wall of tubes within the steam generator without damaging the tubes. The anchoring fingers comprise a central shaft having a cone-shaped locating nose and a tapered body, the taper providing a smaller diameter near the mounting plate of the mast than near the cone-shaped locating nose, and a threaded end remote from the nose. This central member is encased in an expandable sleeve which illustratively may include a plurality of slots about its circumference to permit easy expansion. After the anchoring fingers have been located in appropriate tubes, a nut runner pulls the threaded central member toward the mast, simultaneously expanding the expandable sleeves to ensure a firm grip on the inside tube wall and pulling the mast toward the tubesheet, thereby securely fastening the mast to the tubesheet.

Embodiments of the preferred apparatus can present the tool carrier to the manway for quickly changing or adjusting tools without the necessity for entering the steam generator. Tools are attached to the tool carrier of the articulating arm by a double V-block coupler or other suitable fastener.

All functions are controlled from outside the steam generator. All movement of the articulating arm and tools is controlled by compressed air operating through air motors, air cylinders, and the like, all controlled by a central pneumatic control box or by electrical motors and sensors. To provide operator feedback, a video camera and light are mounted on the apparatus. The computer control which locates the position of the tool carrier is conventional.

The preferred apparatus is capable of automatic location to within less than 0.25 mm (0.01 in) at a 4.5 kg (10 lb) side load and can be manually positioned to within less than 0.13 mm (0.005 in). Furthermore, in the bottom head of a steam generator, the apparatus can lift a minimum of 45 kg (100 lb) to the tubesheet and sustain a load of 90 kg (200 lb) applied at the end of the fully extended articulating arm with less than 13 mm (0.5 in) deflection. In addition, the apparatus can operate in an environment of at least 65°C (150°F). The apparatus can position tools weighing more than 45 kg (100 lb) at a speed of 1 rpm with a minimum lateral force of 13.6 kgf (30 lbf) and can traverse steam generator extremes in a maximum of 30 seconds. The apparatus can be remotely controlled and operated by an operator who is at least 150 m (500 ft) away from the apparatus.

Because the steam generator is radioactive, naturally the apparatus will become radioactive after use. Therefore, particular care was taken during design to ensure that the articulating arm can be disassembled and reassembled simply and readily to permit ease of maintenance. Many maintenance functions, for example, replacement of air motors and locators, can be accomplished in the field in a glove box in half an hour or less.

The invention is more completely and fully described by the following detailed description, given by way of illustrative and non-limiting example, of preferred apparatus embodying the invention and shown in the accompanying drawings, in which:

Figure 1 is a plan view of apparatus embodying the present invention installed in a recirculating steam generator which is illustrated in cutaway cross-section;

Figure 2 shows a mast of the apparatus being installed in a recirculating steam generator;

Figure 3 illustrates installation of an articulating arm following installation of the mast within a recirculating steam generator;

Figure 4 illustrates apparatus embodying the present invention completely assembled and installed in the top head of a once through steam generator;

Figure 5 illustrates installation of a stub-mast by means of an installation support pole and block and tackle in the top head of a once through steam generator;

Figure 6 illustrates installation of the articulating arm using the same means, with the mast already mounted in the top head of a once through steam generator;

Figure 7 is a side elevation in partial cross-section of a locator pin and anchoring finger assembly; and

Figure 8 is a side elevation in partial cross-section of an anchoring finger installed in a tube of a steam generator at the tubesheet.

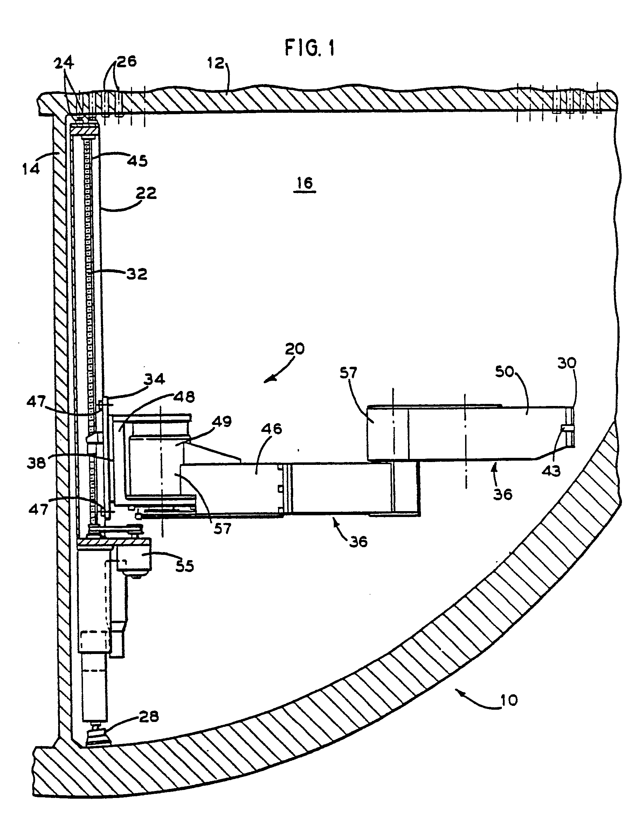

Figure 1 depicts a typical recirculating steam generator 10 having a tubesheet 12 and a partition 14 for separating the steam generator head 16 into hotleg and coldleg portions. Apparatus embodying the present invention, namely a remote manipulator 20, is installed within the head 16 of the recirculating steam generator 10. The remote manipulator 20 comprises a mast 22 fastened at one end to the tubesheet 12 by a plurality of anchoring fingers 24 secured within tubes 26, which in turn are fixed in the tubesheet 12. The opposite end of the mast 22 includes an adjustable foot 28 which is for securing the bottom of the mast 22 to the bottom of the head 16 and may be pneumatically actuated. Adjustment of the adjustable foot 28 changes the height of the mast 22, permitting its use in steam generators of different dimensions. The mast 22 is typically located adjacent and substantially parallel to the partition 14 and substantially along the vertical centre-line of the partition 14 to permit access to the maximum number of tubes by a tool carrier 30. The mast 22 includes a lengthwise screw 32 which carries a movable mounting or trolley plate 34 for providing controlled vertical movement of an articulating arm 36 attached to the mast 22 by a double V-block coupler 38 which comprises a male portion attached to the articulating arm 36 and a female portion attached to the mounting plate 34 of the mast 22. A channel trolley (not shown) attached to the articulating arm 36 is operatively mounted to a channel 45 which, in turn, is attached to the mast 22. Vertical travel of the articulating arm 36 is controlled by rotation of the lengthwise screw 32 controllably driven by a direct current stepper motor 55. Six trolley rollers 47, attached to the movable trolley plate 34, ride in the channel 45 to provide precise but easy vertical movement.

The articulating arm 36 includes an inner or first arm 46 which is pivotally attached to a trolley mounting plate 48. An outer or probe arm 50 is pivotally attached to the end of the inner arm 46 remote from the mast 22 and terminates in the tool carrier 30 that has a pneumatic latching pin 43 for attachment of tools. Figure 1 shows the articulating arm 36 in a basically extended position, but the two pivoting joints in the arm permit its controlled movement in two dimensions in such a manner that it can locate itself at any position in a plane in a range of 180 degrees of arc by pivoting either or both pivotal joints independently and in either direction. Inside an inner junction box 49 is an electrical servo motor 57, having a resolver, for pivoting and controlling the inner arm 46. A second servo motor 57 and associated resolver similarly control rotation of the outer arm 50 relative to the inner arm 46.

In this basic configuration thereof, the remote manipulator 20 can be used in the bottom half of a recirculating steam generator 10 or in the bottom head of a once through steam generator. Certain modifications comprising another embodiment, which will be discussed in detail below, enable the remote manipulator 20 to operate on a 360 degree surface, making it unnecessary to move the remote manipulator 20 in order to reach the tubes that would be in the opposite leg of a recirculating steam generator. Yet another modification leads to another embodiment discussed in detail below which permits operation of the basic remote manipulator 20 in the top head of a once through steam generator and also permits operation in a 360 degree plane of rotation.

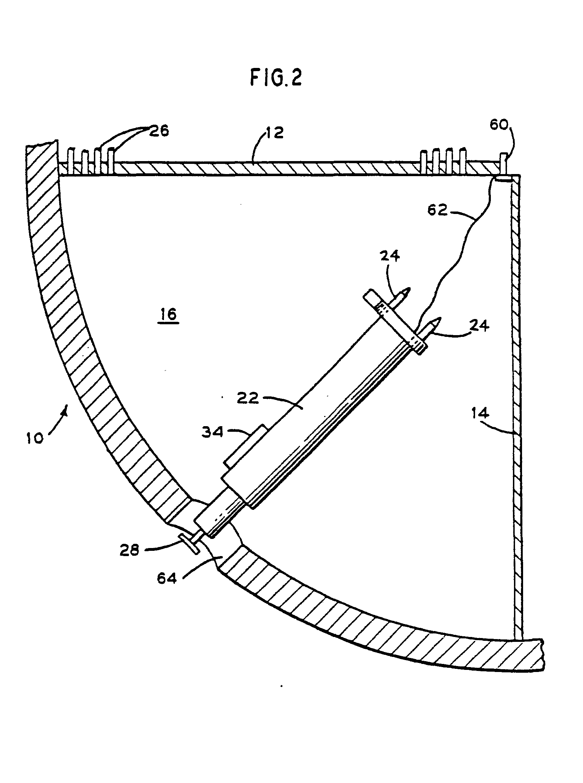

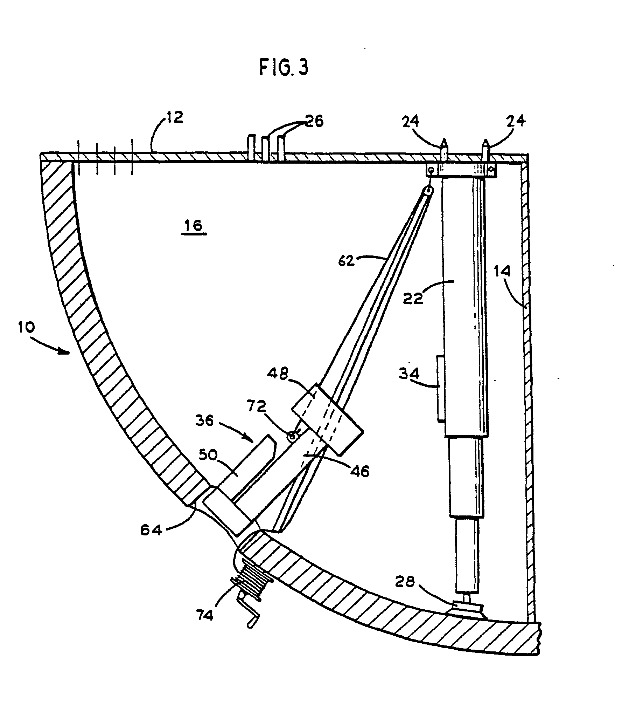

Referring to Figure 2, an anchor pin 60, having a cable 62 fixedly attached thereto, is fastened inside a previously identified tube in the tubesheet 12 from outside a manway 64. The cable 62 initially extends outside the manway 64 (this not being shown in Figure 2) where it is attached to the mast 22 which is hoisted into position as shown in Figure 2. The anchoring fingers 24 are aligned with previously identified tubes. The appropriate tubes for seating the anchoring fingers 24 in the tubesheet 12 are typically marked in advance with a white paint which resists the harsh environment of a steam generator, as is conventional in the industry. The adjustable foot 28 of the now vertical downwardly hanging mast 22 is pneumatically actuated to extend or lengthen, thereby providing a firm base against the bottom of the head 16, as shown in Figure 3. Firmly anchored by the compression force at both the top and bottom provided by the extended adjustable foot 28, the mast 22 provides a strong, stiff support for the articulating arm 36, any tools that may be attached thereto and any forces generated during working operations. A locator pole (not shown) manually held and manipulated by a man outside the manway 64 may be pushed against the mast 22 to help align the anchoring fingers 24 during installation of the mast 22 in the tubesheet 12, although this is not strictly necessary.

Referring to Figure 3, the cable 62 runs over a pulley attached to the mast 22 and is attached at one end to a cable fastener 72 of the articulating arm 36, outside of the manway 64, the cable fastener 72 being near the centre of gravity of the articulating arm 36. At its other end, the pulley cable 62 is connected to a winch 74 attached near the manway 64. The articulating arm 36 is then hoisted by the pulley cable 62 into position using the winch 74 and is locked to the mast 22.

Following the operation described with reference to Figures 2 and 3, the outer arm 50 is rotated away from the inner arm 46 to extend the entire articulating arm 36, which is now in the operating position illustrated in Figure 1. Before operations can be commenced, a tool is attached to the tool carrier 30 shown in Figure 1. By articulating the two joints of the articulating arm 36, and adjusting the height of the articulating arm 36, the tool carrier 30 may be extended to or beyond the edge of the manway 64 to permit ready installation and removal of different tools for performing different tasks. Furthermore, in this position, portions of the articulating arm 36 are accessible for maintenance and repair.

The remote manipulator 20 shown in Figure 1 is removed from the recirculating steam generator 10 by reversing the installation steps described above.

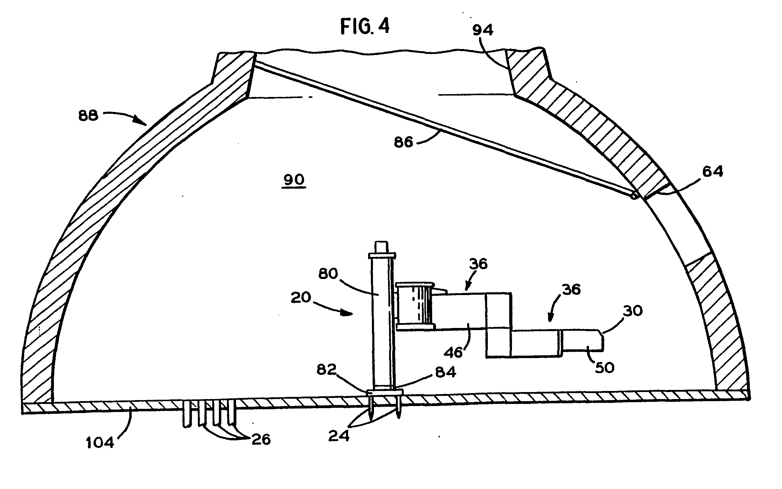

Figure 4 illustrates another preferred embodiment of the apparatus according to the present invention (the remote manipulator 20) for use in the top or upper head 90 of a once through steam generator 88. The remote manipulator 20 in this embodiment comprises a stub-mast 80 fastened to a tubesheet 104 by anchoring fingers 24. The top of the stub-mast 80 is not attached to any support, so that, unlike the embodiment described above in connection with the lower head of a steam generator, a base 82 of the remote manipulator 20 provides the entire support for the system. The articulating arm 36 is attached to the stub-mast 80 in a fashion similar to that discussed above, although its position is inverted, that is, the outer arm 50 is lower than inner arm 46, the opposite of that relationship in the embodiment discussed above. Naturally, this arrangement permits the tool carrier 30 to be moved closer to the tubesheet 104 since the outer arm 50 can be positioned adjacent to the tubesheet in either embodiment.

A turntable 84, comprising an integral portion of the stub-mast 80, rests on the base 82 for rotation thereon and the stub-mast 80 is fixedly attached to the turntable 84. Rotation of the turntable 84 is controlled pneumatically and the turntable 84 can be locked into any of three positions, namely an initial position wherein the double V-block coupler 38 (not shown in Figure 4) on the stub-mast 80 faces the manway 64 to permit installation of the articulating arm 36, and two working positions located 90 degrees on either side of the initial position, permitting the remote manipulator 20 to be rotated into either of two working positions 180 degrees of arc apart, permitting the articulating arm 36 to operate with 360 degrees of rotation. The tool carrier 30 can thereby reach all tubes within the top head of the once through steam generator, except those tubes located relatively close to the base 82, from one position, and can reach all tubes with one change of position of the remote manipulator 20. In this embodiment also, the tool carrier 30 on the working end of the outer arm 50 can be presented at the manway 64 for changing tools and performing some maintenance on the articulating arm 36. Also illustrated in Figure 4 is an installation support pole 86, used to install the remote manipulator 20, and which may be left in position while the remote manipulator 20 is being used. Like the embodiment described above, this embodiment can be installed in and removed from the steam generator without having anyone enter the steam generator, although this embodiment is directed only to a remote manipulator for the top head of a once through steam generator.

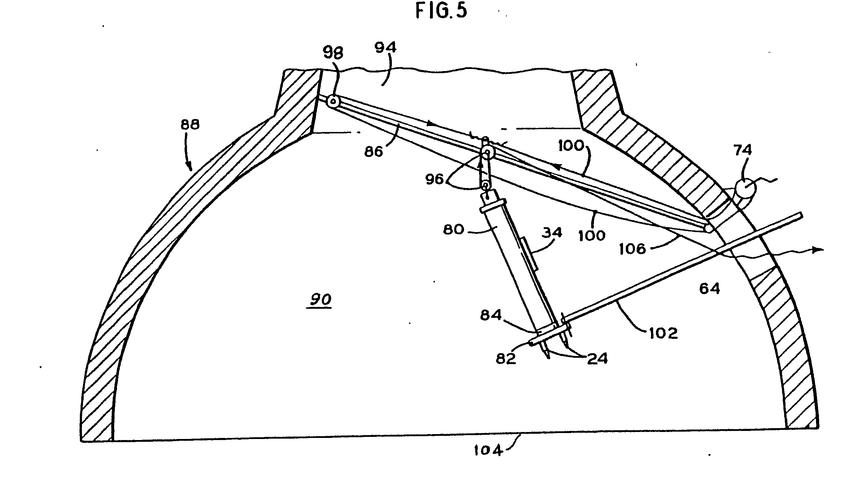

Referring to Figure 5, which shows installation of the stub-mast 80, the installation support pole 86 is manually inserted into the top head 90 of the once through steam generator 88 by an operator standing outside of the manway 64, who props the remote end of the installation support pole 86 against an inlet neck 94 of the top head 90 and detachably affixes the proximate end of the installation support pole 86 to the inside surface of the top head 90 adjacent the top of the manway 64. Previously attached to the installation support pole 86 is a block and tackle 96, suspended from a pulley 98. The lower end of the block and tackle 96 is detachably attached to the top of the stub-mast 80. By turning a ratcheting winch 74, detachably bolted to the outer flange of the manway 64, an operator outside of the manway 64 actuates a cable 100 causing the block and tackle 96 with the attached stub-mast 80 to travel upwardly along the installation support pole 86. If desired, a guiding pole 102 may be detachably connected to the submast 80, desirably at a point on or near the base 82, and manipulated by an operator outside the manway 64 to prevent excess swinging of the stub-mast 80 during installation and to help align the anchoring fingers 24 with previously marked tubes. This procedure is not strictly necessary, however, since the stub-mast 80 tends to hang vertically true. When the stub-mast 80 has reached the appropriate point near the midpoint of the tubesheet 104 (Figure 4), it is lowered to the tubesheet 104 by means of the block and tackle 96, remotely operated from outside the manway 64 by a B&T cable 106. Nut runners tighten the anchoring fingers 24 into previously identified tubes as described above. The anchoring pins or fingers 24 are described in more detail below.

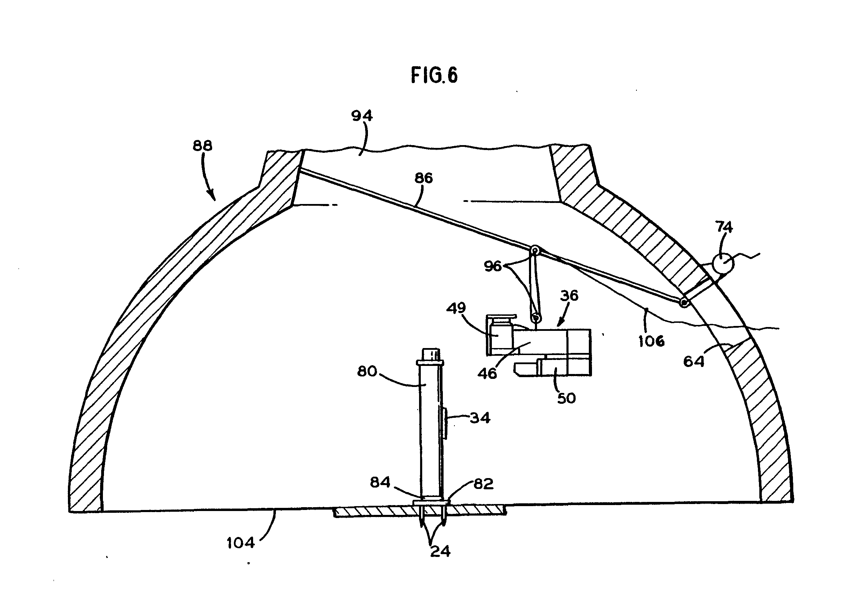

Referring to Figure 6, which shows installation of the articulating arm 36, the block and tackle 96 is detached from the top of the stub-mast 80 by a manually operated hooked end cable manipulator (not shown) and returned to its starting position adjacent the manway 64, where it is attached to the articulating arm 36 at a point near the centre of gravity of the folded articulating arm 36, so as to maintain the articulating arm 36 in a basically horizontal position during installation. Using the block and tackle 96 and the ratcheting winch 74, the articulating arm 36 is moved up the installation support pole 86, just as the stub-mast 80 was. The articulating arm 36, when in the appropriate position, is lowered remotely by the block and tackle 96 by the B&T cable 106, whose remote end is outside of the manway 64 and may be positioned by an operator outside of the manway 64 during installation. The articulating arm 36 is then locked on to the stub-mast 80 by a double V-block coupler. The block and tackle 96 is then detached from the articulating arm 36 and moved to a position where it will not interfere with the assembled remote manipulator 20 shown in Figure 4. The articulating arm 36 is then moved to the manway 64 for attachment of tools to the tool carrier 30. The remote manipulator 20 is then ready to perform its computer-controlled conventional locating operations.

The articulating arm 36 can be moved up and down the stub-mast 80 in the manner described above regarding the preceding embodiment. To remove the remote manipulator 20 from the top head 90, the sequence described above is merely reversed.

The articulating arm 36 may comprise substantially rectangular tubular members constructed by welding steel plates along their seams. In a preferred form, however, to reduce weight, the mast 22, stub-mast 80 and articulating arm 36 are constructed primarily of hardened aluminium, which is anodised to resist environmental degradation. Other members, fasteners, couplers and the like are desirably made of stainless steel to increase strength and reduce corrosion. Pivoting of the joint between the mounting plate 48 of the articulating arm 36 and the first or inner arm 46, and between the first arm 46 and the outer or probe arm 50, may be accomplished by conventional direct current electric stepper motors and other types of electric or air motors, such as servo motors, and vertical movement of the articulating arm 36 along the mast 22 or stub-mast 80 may be achieved similarly. The installation support pole 86 may be of aluminium, steel, or other suitable material which provides sufficient strength and rigidity. Conventional 6 mm (0.25 in) diameter reinforced tubing provides suitable air delivery means for driving the pneumatic actuators that control the remote manipulator 20. Similar tubing is used to control and operate tools that may be attached to the tool carrier 30.

Naturally, the articulating arm 36 may be permanently connected to the mast 22, or in the case of a remote manipulator for the upper head of the once through steam generator, the articulating arm 36 may be permanently attached to the stub-mast 80, permitting installation of the entire remote manipulator in a single procedure, such as those discussed above in connection with the mast of a two-piece manipulator. Providing a manipulator which can be installed as a single assembly obviously reduces the labour cost and time associated with installation and obviates the necessity for designing a detachable coupling which provides very precise alignment of the articulating arm 36 with the mast 22, or stub-mast 80. Such a single assembly is particularly attractive when the remote manipulator will be subjected to light or moderate loads, which naturally reduce the required structural strength and permit substantial reductions in manipulator weight.

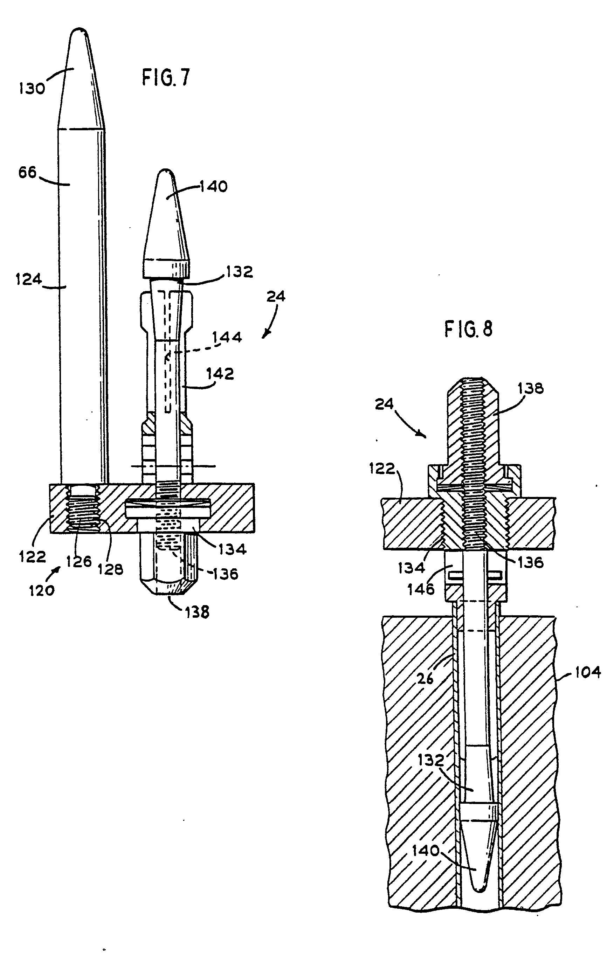

Figure 7 illustrates a locator pin 66 and anchoring finger 24 assembly 120 used to secure the mounting plate of the stub-mast 80 to the tubesheet 104 (Figure 4). The locator pin and anchoring finger assembly 120 has a mounting block 122 for securing two longitudinal members, which may naturally form a portion of a larger mounting plate, such as that which forms the base of the stub-mast 80. The locator pin 66 includes a substantially cylindrical body 124 having a reduced diameter fitting end 126 secured in an aperture 128 of the mounting block 122 by press-fitting, welding, or other suitable means. A locating end of the locator pin 66 comprises a cone-shaped nose portion 130. The anchoring finger 24 includes a mandrel 132 seated in an aperture 134 of the mounting block 122 and having a threaded end 136 which penetrates the mounting block 122 for mating with a nut 138. As oriented in Figure 7, the diameter of the mandrel 132 increases as the shaft goes upwardly. The end of the anchoring finger or pin 24 remote from the nut 138 terminates in a cone-shaped nose portion 140. Both nose portions or noses 130, 140 are designed to permit easy penetration of tubes without being precisely aligned with the centre of the tubes and without causing damage to the tubes. A sleeve 142 is seated around the tapered body portion of the mandrel 132 above the mounting block 122 and includes a plurality of longitudinal slots 144 in the upper portion of the sleeve 142, providing the sleeve 142 with circumferential flexibility. The locator pin 66 is longer than the anchoring finger 24. The locator pin 66 may have a diameter somewhat smaller than the inside diameter of the tubes into which it will be inserted. In the configuration illustrated in Figure 7, the assembly is used for installing the mast 22 into the head of a recirculating steam generator, as illustrated in Figure 2 and described above; and for installing the base and turntable in the top head of a once through steam generator.

In operation, the locator pin 66, and thereby any apparatus connected to it by the mounting block 122, is positioned so that the small end of the nose portion 130 is within the side wall of the inside of a tube, and the mounting block 122 is then moved upwardly, as illustrated in Figure 7, so that the locator pin 66 is inserted into the appropriate tube until the top surface of the mounting block 122 is adjacent the tube sheet. The anchoring finger 24 will naturally also be seated almost entirely within a tube. Tightening the nut 138 draws the mandrel 132 downwardly, causing the circumference of the sleeve 142 to swell thereby pushing the sleeve 142 against the inside side wall of the tube. The more the nut 138 is tightened, the greater is the force exerted against the side wall of the tube. Simultaneously, the mounting block 122 is drawn against the tubesheet. Thus, the anchoring finger 24 provides a fastener which acts much like a bolt and nut. The metal-to-metal contact permits application of substantial force against the inside of the tube without destruction of soft materials, for example, rubber, which have been used in the past to prevent damage to the tubes. In addition, the anchoring finger 24 will not damage the tube.

In another preferred arrangement illustrated in Figure 8, which shows an anchoring finger 24 installed in a tube 26 adjacent a tubesheet 104, the anchoring finger 24 includes a shoulder portion 146 extending downwardly beyond the mounting block 122 and having a diameter larger than the diameter of the tube. The shoulder portion 146 seats against the tube 26 and the mounting block 122 is spaced away from the tubesheet 104. This embodiment of the anchoring finger 24 is used to secure the stub-mast 80 to clear tube plugs or other obstructions protruding from the tubesheet 104. This clearance is not necessary in the case of the locator pin 66 and anchoring finger 24 assembly as used in Figure 7, because the mounting block 122 occupies a much smaller surface area than the base of stub-mast 80.

**Claims**

1. A method of installing a remote manipulator (20) within the head (16; 90) of a steam generator (10; 88), the manipulator (20) comprising a mast (22; 80), an articulating arm (36) releasably attachable to the mast (22; 80) by means of a trolley plate (34) for movement along the mast, and means (30) for detachably connecting tools to the articulating arm (36), the method being characterised by:
attaching one end of a cable (62) to the interior of the head (16; 90) of the steam generator (10; 88);
hoisting the mast (22; 80) of the manipulator (20) along the cable (62) into a substantially perpendicular position against a tubesheet (12; 104) of the steam generator (10; 88);
fixedly securing the mast (22; 80), when positioned in the perpendicular position, against the tubesheet (12; 104);
hoisting the articulating arm (36) into position against the mast (22; 80); and
locking the articulating arm (36) releasably on the trolley plate (34).

2. A method according to claim 1, wherein the cable (62) is attached to an anchor pin (60), and the anchor pin is located in the tubesheet (12; 104).

3. A method according to claim 1 or claim 2, wherein the steps of hoisting the mast (22; 80) and the articulating arm (36) are assisted by the use of a manually-manipulated rod (102).

4. A method according to claim 1, wherein the tubesheet (12) is at the top of the head (16), and including moving an actuatable foot (28) of the articulating arm (36) downwardly until the foot firmly grips the floor of the head (16), after fixedly securing the mast (22) against the tubesheet (12).

5. A remote manipulator for installation within the head (16; 90) of a steam generator (10; 88) by a method according to claim 1, the manipulator (20) comprising:
a mast (22; 80);
means for installing the mast (22; 80) in a substantially perpendicular position against a tubesheet (12; 104) within the head (16; 90) of the steam generator (10; 88);
means (24) for fixedly securing the mast (22; 80) against the tubesheet (12; 104), when the mast (22; 80) is positioned in the perpendicular position;
an articulating arm (36) moveable along the mast (22; 80);
means (30) for detachably connecting tools to the articulating arm (36); and
means (49, 57; 84) for providing rotational movement of the articulating arm (36) about the mast (22; 80);
characterised by:
a trolley plate (34) carried by the mast (22; 80) for guided lengthwise movement along the mast (22; 80);
means (38) for detachably locking the articulating arm (36) on to the trolley plate (34);
means (32, 55) for controllably moving the trolley plate (34) lengthwise along the mast (22; 80) so as to provide controlled perpendicular movement of the articulating arm (36); and
means (72) for attaching the mast (22; 80) and the articulating arm (36) to a hoisting mechanism for installation within the head (16; 90), such that, during installation, firstly the mast (22; 80) can be hoisted along a cable (62) having one end attached to the interior of the head (16; 90) of the steam generator (10; 88) to allow the mast (22; 80) to be fixedly secured to the tubesheet (12; 104), and secondly the articulating arm (36) can be hoisted into position against the mast (22; 80).

6. A remote manipulator according to claim 5, wherein the articulating arm (36) comprises an inner arm (46), an outer arm (50), first pivot means for pivotally attaching one end of the inner arm (46) to the trolley plate (34) about an axis substantially parallel to and spaced from the mast (22; 80), second pivot means for pivotally attaching the outer arm (50) to the other end of the inner arm (46), means (57) for rotating the outer arm (50) relative to the inner arm (46), and means (57) for rotating the inner arm (46) relative to the trolley plate (34).

7. A remote manipulator according to claim 5 or claim 6, wherein the means for moving the trolley plate comprises a lengthwise screw (32) mounted to the mast (22; 80) for rotation about the longitudinal axis of the screw (32), carrier means for mounting the trolley plate (34) to the screw (32) for lengthwise movement responsive to rotation of the screw, and means (55) for rotating the screw (32) for moving the trolley plate (34) and the articulating arm (36) lengthwise with respect to the mast (22; 80).

8. A remote manipulator according to claim 5, claim 6 or claim 7, including an adjustable foot (28) telescopically connected to the end of the mast (22) opposite the means (24) for fixedly securing the mast against the tubesheet (12), such that adjustment of the position of the foot (28) with respect to the mast (22) changes the effective height of the mast.

9. A remote manipulator according to claim 5, claim 6 or claim 7, wherein the mast (80) comprises an integral turntable (84).

10. A remote manipulator according to claim 9, wherein the turntable (84) is capable of being locked in one of three rotational positions of the mast (80), including a central position for connecting the articulating arm (36) to the mast (80), and two positions at 90 degrees from and on opposite sides of the central position, to enable the articulating arm (36) to reach substantially all the tubes (26) in the tubesheet (104).

11. A remote manipulator according to any one of claims 5 to 10, wherein the means for fixedly securing the mast comprises a plurality of anchoring fingers (24).

12. A remote manipulator according to claim 11, wherein each of the anchoring fingers (24) comprises:

a mandrel (132) having a positioning nose (140) at its insertion end for locating and centring the anchoring finger (24) in a tube (26) of a tubesheet (12; 104), a tapered body portion, the taper providing a larger diameter proximate the nose (140), and having its other end (136) threaded;

a substantially cylindrical sleeve (142) having a plurality of longitudinal slots (144) and seated over the mandrel (132); and

a nut (138) threadably attached to the threaded end (136) of the mandrel (132).

13. A remote manipulator according to claim 11 or claim 12, wherein the means for fixedly securing the mast includes a locator pin (66) longer than the anchoring fingers (24), each of the locator pin (66) and the anchoring fingers (24) having a tapered nose (130, 140) for easy insertion into the tubes (26) in the tubesheet (104).

14. A remote manipulator according to claim 11, claim 12 or claim 13, when dependent on claim 9 or claim 10, including a mast base (82) rotatably mounted to the turntable (84), the anchoring fingers (24) being fixed to and extending from the mast base (82).

15. A remote manipulator according to any one of claims 5 to 14, wherein the hoisting mechanism includes a winch (74) for hoisting the mast (22; 80) along the cable (62).

16. A remote manipulator according to claim 15, wherein an anchoring pin (60) is provided for fixing in the head (16; 90) of the steam generator (10; 88) for supporting the cable (62) during hoisting of the mast (22; 80).

17. A remote manipulator according to any one of claims 5 to 16, wherein the means for attaching the articulating arm (36) to the hoisting mechanism comprises a cable fastener (72) provided on the articulating arm (36) near the centre of gravity of the articulating arm (36).

18. A remote manipulator according to any one of claims 5 to 17, wherein the means for detachably locking the articulating arm (36) on to the trolley plate (34) comprises a pneumatic coupler (38).

19. A remote manipulator according to any one of claims 5 to 18, wherein the means for detachably connecting tools to the articulating arm (36) comprises a pneumatic latch (30).

## Patentansprüche

1. Verfahren zum Installieren eines Fernbedienungsmanipulators (20) innerhalb des Kopfes (16; 90) eines Dampferzeugers (10; 88), wobei der Manipulator (20) einen Mast (22; 80), einen Gelenkarm (36), welcher an dem Mast (22; 80) mit Hilfe einer Laufplatte (34) zur Bewegung entlang des Mastes lösbar befestigt ist, und Mittel (30) aufweist zum abnehmbaren Verbinden von Werkzeugen mit dem Gelenkarm (36), wobei das Verfahren gekennzeichnet ist durch:

Anbringen des Endes eines Seiles (62) im Inneren des Kopfes (16; 90) des Dampferzeugers (10; 88);

Ziehen des Mastes (22; 80) des Manipulatores (20) entlang des Seiles (62) bis zu einer im wesentlichen senkrechten Stellung gegenüber einer Rohrplatte (12; 104) des Dampferzeugers (10; 88);

stationäres Befestigen des Mastes (22; 80), wenn dieser in der gegenüber der Rohrplatte (12; 104) senkrechten Stellung positioniert ist;

Ziehen des Gelenkarmes (36) in eine Stellung an dem Mast (22; 80); und

lösbares Verriegeln des Gelenkarmes (36) an der Laufplatte (34).

2. Verfahren nach Anspruch 1, wobei das Seil (62) an einem Ankerstift (60) angebracht wird und der Ankerstift in der Rohrplatte (12; 104) angeordnet ist.

3. Verfahren nach Anspruch 1 oder 2, wobei die Schritte, den Mast (22, 80) und den Gelenkarm (36) aufzuziehen durch die Verwendung einer handbetätigten Stange (102) unterstützt werden.

4. Verfahren nach Anspruch 1, wobei die Rohrplatte (12) sich an der Spitze des Kopfes (16) befindet und welches das Bewegen eines betätigbaren Fußes (28) des Mastes (22; 80) nach unten einschließt, bis der Fuß den Boden des Kopfes (16) sicher erfaßt, nachdem der Mast (22) stationär an der Rohrplatte (12) befestigt ist.

5. Fernbetätigter Manipulator für die Installation innerhalb des Kopfes (16; 90) eines Dampferzeugers (10; 88) nach einem Verfahren gemäß Anspruch 1, wobei der Manipulator (20) aufweist:

einen Mast (22; 80);

eine Einrichtung zum Installieren des Mastes (22; 80) in einer im wesentlichen senkrechten Stellung gegenüber einer Rohrplatte (12; 104) innerhalb des Kopfes (16; 90) des Dampferzeugers (10; 88);

eine Einrichtung (24) zum festen Anbringen des Mastes (22; 80) an der Rohrplatte (12; 104), wenn der Mast (22; 80) in der senkrechten Stellung angeordnet ist;

einen entlang des Mastes (22; 80) bewegbaren Gelenkarm;

eine Einrichtung (30) zum lösbaren Verbinden von Werkzeugen mit dem Gelenkarm (36); und

eine Einrichtung (49, 57; 84), um eine Drehbewegung des Gelenkarmes (36) um den Mast (22; 80) vorzusehen;

gekennzeichnet durch:

eine Laufplatte (34), welche von dem Mast (22; 80) getragen wird für eine geführte Längsbewegung entlang des Mastes (22; 80);

eine Einrichtung (38) zum lösbaren Verriegeln des Gelenkarmes (36) an der Laufplatte (34);

eine Einrichtung (32, 55) zum gesteuerten Bewegen der Laufplatte (34) in Längsrichtung entlang des Mastes (22; 80), um so eine kontrollierte Bewegung senkrecht zum Bewegen des Gelenkarmes (36) vorzusetzen; und

eine Einrichtung (72) zum Anbringen des Mastes (22; 80) und des Gelenkarmes (36) an einem Aufzugmechanismus für die Installation innerhalb des Kopfes (16; 90), derart, daß während der Installation zuerst der Mast (22; 80) entlang eines Seiles (62), dessen eines Ende im Inneren des Kopfes (16; 90) des Dampferzeugers (10; 88) angebracht ist, hochgezogen werden kann, so daß der Mast (22, 80) fest an der Rohrplatte (12; 104) angebracht werden kann, und daß als zweites der Gelenkarm (36) in seine Stellung an dem Masten (22; 80) hochgezogen werden kann.

6. Fernbetätigter Manipulator nach Anspruch 5, wobei der Gelenkarm (36) einen inneren Arm (46), einen äußeren Arm (50), erste Schwenkmittel zum schwenkbaren Anbringen eines Endes des inneren Armes (46) an der Laufplatte (34) um eine Achse, die im wesentlichen parallel zu dem Masten (22, 80) und von diesem beabstandet ist, eine zweite Schwenkeinrichtung zum schwenkbaren Anbringen des äußeren Armes (50) an dem anderen Ende des inneren Armes (46), Mittel (57) zum Drehen des äußeren Armes (50) relativ zum inneren Arm (56) und Mittel (57) zum Drehen des inneren Armes (46) relativ zu der Laufplatte (34) aufweist.

7. Fernbetätigter Manipulator nach Anspruch 5 oder 6, wobei die Mittel zum Bewegen der Laufplatte eine sich in Längsrichtung erstreckende Schraube (32) aufweisen, welche an dem Mast (22; 80) für eine Drehung um ihre Längsachse montiert ist, Trägermittel zum Befestigen der Laufplatte (34) an der Schraube (32) aufweist für eine Bewegung in Längsrichtung unter Ansprechen auf die Drehung der Schraube, sowie Mittel (55) aufweist zum Drehen der Schraube (33) um die Laufplatte (34) um den Gelenkarm (36) in Bezug auf den Mast (22; 80) in Längsrichtung zu bewegen.

8. Fernbetätigter Manipulator nach Anspruch 5, 6 oder 7, welcher einen einstellbaren Fuß (28) aufweist, der teleskopartig mit einem Enden des Mastes (22) verbunden ist, welches den Mitteln (24) zum festen Anbringen des Mastes an der Rohrplatte (12) gegenüberliegt, derart, daß die Einstellung der Position des Fußes (28) in Bezug auf den Mast (22) die effektive Höhe des Mastes verändert.

9. Fernbetätigter Manipulator nach Anspruch 5, 6 oder 7, wobei der Mast (80) eine integrierte Drehscheibe (84) aufweist.

10. Fernbetätigter Manipulator nach Anspruch 9, wobei die Drehscheibe (84) in der Lage ist, in einer von drei Drehstellungen des Mastes (80) verriegelt zu werden, einschließlich einer Mittenstellung für das Verbinden des Gelenkarmes (36) mit dem Mast (80) und zwei Stellungen um 90° entfernt auf gegenüberliegenden Seiten von der Mittenstellung, um zu ermöglichen, daß der Gelenkarm (36) im wesentlichen alle Rohre (26) in der Rohrplatte (104) erreicht.

11. Fernbetätigter Manipulator nach einem der Ansprüche 5 bis 10, wobei die Mittel zum festen Anbringen des Mastes eine Mehrzahl von Verankerungsfingern (24) aufweisen.

12. Fernbetätigter Manipulator nach Anspruch 11, wobei jeder der Verankerungsfinger (24) aufweist:

einen Dorn (132) mit einer Positioniernase (140) an seinem Einschubende, um den Verankerungsfinger (24) in einem Rohr (26) einer Rohrplatte (12; 104) anzuordnen und zu zentrieren, ein abgeschrägtes Hauptteil, wobei die Abschrägung einen größeren Durchmesser im Anschluß an das Vorderteil (140) für einen größeren Durchmesser sorgt, und wobei das andere Ende (136) ein Gewinde hat;

eine im wesentlichen zylindrische Hülse (142), die eine Mehrzahl von Längsschlitzen (144) hat und auf dem Dorn (132) aufsitzt; und

eine Mutter (138), welche auf das Gewindeende (136) des Dornes (132) aufgeschraubt ist.

13. Fernbetätigter Manipulator nach Anspruch 11 oder 12, wobei die Einrichtung zum festen Anbringen des Mastes einen Leitstift (66) aufweist, welcher länger als die Verankerungsfinger (24) ist, wobei jeder Leitstift (66) und die Verankerungsfinger (24) ein abgeschrägtes Vorderteil (130, 140) haben zum einfachen Einführen in die Rohre (26) in der Rohrplatte (104).

14. Fernbetätigter Manipulator nach Anspruch 11, 12 oder 13, soweit auf Anspruch 9 oder 10 zurückbezogen, unter Einschluß einer Mastbasis (82), welche drehbar an der Drehscheibe (84) befestigt ist, wobei die Ankerfinger (24) an der Mastbasis (82) befestigt sind und sich von dieser aus erstrecken.

15. Fernbetätigter Manipulator nach einem der Ansprüche 5 bis 14, wobei der Aufzugsmechanismus eine Winde (74) zum Heraufziehen des Mastes (22; 80) entlang des Seiles (62) aufweist.

16. Fernbetätigter Manipulator nach Anspruch 15, wobei ein Ankerstift (60) zum Befestigen in dem Kopf (16; 90) des Dampferzeugers (10; 88) vorgesehen ist, um das Seil während Heraufziehens des Mastes (22; 80) zu haltern.

17. Fernbetätigter Manipulator nach einem der Ansprüche 5 bis 16, wobei die Einrichtung zum Anbringen des Gelenkarmes (36) an dem Aufzugsmechanismus eine Seilbefestigung (72) aufweist, welche an dem Gelenkarm (36) in der Nähe seines Schwerpunktes vorgesehen ist.

18. Fernbetätigter Manipulator nach einem der Ansprüche 5 bis 17, wobei die Einrichtung zum lösbaren Verriegeln des Gelenkarmes (36) an der Laufplatte (34) eine pneumatische Kupplung (38) aufweist.

19. Fernbetätigter Manipulator nach einem der Ansprüche 5 bis 18, wobei die Einrichtung zum lösbaren Verbinden von Werkzeugen mit dem Gelenkarm (36) eine pneumatische Verriegelung (30) aufweist.

## Revendications

1. Procédé de pose d'un télémanipulateur (20) dans le dôme (16, 90) d'un générateur de vapeur (10, 88), le manipulateur (20) comprenant un mât (22, 80), un bras d'articulation (36) pouvant être fixé au mât (22, 80) de manière amovible au moyen d'une plaque-chariot (34) pour se déplacer le long du mât, et un moyen (30) assurant le raccordement amovible d'outils au bras d'articulation (36), le procédé étant caractérisé en ce que:
   - on fixe une extrémité d'un câble (62) à l'intérieur du dôme (16, 90) du générateur de vapeur (10, 88);
   - on hisse le mât (22, 80) du manipulateur le long du câble (62) jusqu'à le placer quasi verticalement contre une plaque tubulaire (12, 104) du générateur de vapeur (10, 88);
   - on fixe le mât (22, 80), une fois placé verticalement, contre la plaque tubulaire (12, 104);
   - on hisse le bras d'articulation (36) en place contre le mât (22, 80); et
   - on verrouille de manière amovible le bras d'articulation (36) sur la plaque-chariot (34).

2. Procédé selon la revendication 1, dans lequel le câble (62) est fixé à un goujon d'ancrage (60) et le goujon d'ancrage est placé dans la plaque tubulaire (12, 104).

3. Procédé selon la revendication 1 ou la revendication 2, dans lequel les opérations de hissage du mât (22, 80) et du bras d'articulation (36) sont assistées par l'utilisation d'une barre manipulée manuellement (102).

4. Procédé selon la revendication 1, dans lequel la plaque tubulaire (12) se trouve au sommet du dôme (16), et comporte le déplacement d'un pied manoeuvrable (28) du bras d'articulation (36) vers le bas jusqu'à ce qu'il agrippe fermement le plancher du dôme (16), après qu'on ait fermement fixé le mât (22) contre la plaque tubulaire (12).

5. Télémanipulateur pour pose à l'intérieur du dôme (16, 90) d'un générateur de vapeur (10, 88) par procédé selon la revendication 1, le manipulateur (20) comprenant:
   - un mât (22, 80);
   - un moyen pour la pose du mât (22, 80) en position sensiblement verticale contre une plaque tubulaire (12, 104) située dans la tête (16, 90) du générateur de vapeur (10, 88);
   - un moyen (24) assurant la fixation du mât (22, 80) contre la plaque tubulaire (12, 104), une fois le mât (22, 80) placé dans la position verticale;
   - un bras d'articulation (36) mobile le long du mât (22, 80);
   - un moyen (30) permettant de raccorder de manière amovible des outils au bras d'articulation (36); et

   - un moyen (49, 57, 87) assurant un mouvement angulaire du bras d'articulation (36) autour du mât (22, 80);
   caractérisé par:
   - une plaque-chariot (34) portée par le mât (22, 80) pour décrire un mouvement longitudinal guidé le long du mât (22, 80);
   - un moyen (38) propre à verrouiller de manière détachable le bras d'articulation (36) sur la plaque-chariot (34);
   - un moyen (32, 55) propre à déplacer de manière réglable la plaque-chariot (34) le long du mât (22, 80) afin d'assurer un déplacement vertical contrôlé du bras d'articulation (36); et
   - un moyen (72) de fixation du mât et du bras d'articulation (36) à un mécanisme de hissage en vue de la pose à l'intérieur du dôme (16, 90), de façon que, pendant la pose, on puisse en premier lieu hisser le mât (22, 80) le long d'un câble (62) présentant une extrémité fixée à l'intérieur du dôme (16, 90) du générateur de vapeur (10, 88) pour permettre d'assujettir le mât (22, 80) sur la plaque tubulaire (12, 104), et en second lieu hisser le bras d'articulation (36) en place contre le mât (22, 80).

6. Télémanipulateur selon la revendication 5, dans lequel le bras d'articulation (36) comprend un bras intérieur (46), un bras extérieur (50), un premier moyen d'articulation pour la fixation articulée d'une extrémité du bras intérieur (46) la plaque-chariot (34) autour d'un axe sensiblement parallèle au mât (22, 80) et espacé de ·lui, un second moyen d'articulation pour la fixation articulée du bras extérieur (50) à l'autre extrémité du bras intérieur (46), un moyen (57) permettant de faire pivoter le bras extérieur (50) par rapport au bras intérieur (46), un moyen (57) permettant de faire pivoter le bras extérieur (50) par rapport au bras intérieur (46) et un moyen (57) permettant de faire pivoter le bras intérieur (46) par rapport à la plaque-chariot (34).

7. Télémanipulateur selon la revendication 5 ou la revendication 6, dans lequel le moyen de déplacement de la plaque-chariot comprend une vis longitudinale (32) montée sur le mât (22, 80) pour tourner autour de l'axe longitudinal de la vis (32), un moyen porteur assurant le montage de la plaque-chariot (34) sur la vis (32) en vue d'un déplacement longitudinal en réponse à la rotation de la vis, et un moyen (55) propre à faire tourner la vis (32) pour déplacer la plaque-chariot (34) et le bras d'articulation (36) longitudinalement par rapport au mât (22, 80).

8. Télémanipulateur selon la revendication 5, la revendication 6 ou la revendication 7, comportant un pied réglable (28) relié de manière télescopique à l'extrémité du mât (22) opposée au moyen (24) de fixation du mât contre la plaque tubulaire (12), de façon que le réglage de l'emplacement du pied (28) par rapport au mât (22) modifie la hauteur effective du mât.

9. Télémanipulateur selon la revendication 5, la revendication 6 ou la revendication 7, dans lequel le mât (80) comporte une table tournante intégrante (84).

10. Télémanipulateur selon la revendication 9, dans lequel la table tournante (84) est susceptible d'être verrouillée dans l'une des trois positions angulaires du mât (80), comportant une position médiane pour le raccordement du bras d'articulation (36) au mât (80), et deux positions situées à 90° de part et d'autre de la position médiane, pour permettre au bras d'articulation (36) d'atteindre la quasi-to-talité des tubes (26) montés dans la plaque tubulaire (104).

11. Télémanipulateur selon l'une quelconque des revendications 5 à 10, dans lequel le moyen de fixation du mât comporte une série de doigts d'ancrage (24).

12. Télémanipulateur selon la revendication 11, dans lequel chacun des doigts d'ancrage (24) comprend:

- un mandrin (132) comportant un nez de positionnement (140) à son extrémité d'insertion pour placer et centrer le doigt d'ancrage (24) dans un tube (26) d'une plaque tubulaire (12, 104), un tronçon de corps évasé, l'évasement établissant un plus grand diamètre près du nez (140), et dont l'autre extrémité (136) est filetée;

- un manchon sensiblement cylindrique (142) présentant une série de fentes longitudinales (144) et enfilé sur le mandrin (132); et

- un écrou (138) vissé sur l'extrémité filetée (136) du mandrin (132).

13. Télémanipulateur selon la revendication 11 ou la revendication 12, dans lequel le moyen de fixation du mât comporte un goujon positionneur (66) plus long que les doigts d'ancrage (24), le goujon positionneur (66) et les doigts d'ancrage (24) présentant chacun un nez amenuisé (130, 140) en vue d'une insertion aisée dans les tubes (26) de la plaque tubulaire (104).

14. Télémanipulateur selon la revendication 9, la revendication 10, la revendication 11, la revendication 12 ou la revendication 13, comportant une base de mât (82) montée tourillonnante sur la table tournante (84), les doigts d'ancrage (24) étant fixés à la base de mât (82) et s'étendant à partir d'elle.

15. Télémanipulateur selon l'une quelconque des revendications 5 à 14, dans lequel le mécanisme de hissage comporte un treuil (74) pour le hissage du mât (22, 80) le long du câble (62).

16. Télémanipulateur selon la revendication 15, dans lequel un goujon d'ancrage (60) est prévu pour se fixer dans le dôme (16, 90) du générateur de vapeur (10, 88) pour supporter le câble (62) pendant le hissage du mât (22, 80).

17. Télémanipulateur selon l'une quelconque des revendications 5 à 16, dans lequel le moyen de fixation du bras d'articulation (36) au mécanisme de hissage est constitué par une fixation de câble (72) prévue sur le bras d'articulation (36) près du centre de gravité de celui-ci.

18. Télémanipulateur selon l'une quelconque des revendications 5 à 17, dans lequel le moyen propre à verrouiller de manière amovible le bras d'articulation (36) sur la plaque-chariot (34) est constitué par un coupleur pneumatique (38).

19. Télémanipulateur selon l'une quelconque des revendications 5 à 18, dans lequel le moyen propre à fixer de manière amovible des outils sur le bras d'articulation (36) est constitué par un loqueteau pneumatique (30).

FIG. 1

FIG.2

FIG.3

FIG.4

FIG.5

FIG.6

FIG. 7

FIG. 8